# EUROPÄISCHE PATENTSCHRIFT

(11) **EP 3 165 778 B1**
(45) Veröffentlichungstag und Bekanntmachung des Hinweises auf die Patenterteilung: **01.01.2020**
(21) Anmeldenummer: 15193274.6
(22) Anmeldetag: 05.11.2015
(51) Int. Cl.: F16B 5/02, F01D 25/24, F01D 25/26, F16B 19/02, F16B 43/00

(54) **ANORDNUNG ZUR VERBINDUNG VON TURBOMASCHINENELEMENTEN**
ASSEMBLY FOR THE CONNECTION OF TURBOENGINE ELEMENTS
SYSTEME DE LIAISON D'ELEMENTS DE TURBOMACHINE

(43) Veröffentlichungstag der Anmeldung: 10.05.2017
(73) Patentinhaber: MTU Aero Engines AG, 80995 München (DE)
(72) Erfinder: Klötzer, Alexander, 82256 Fürstenfeldbruck (DE); Feldmann, Manfred, 82223 Eichenau (DE)

(56) Entgegenhaltungen:
- US-A- 5 848 874
- US-A1- 2013 223 982

## Beschreibung

Die vorliegende Erfindung betrifft eine Anordnung mit einem ersten Turbomaschinenelement und einem zweiten Turbomaschinenelement sowie eine Turbomaschine mit einer solchen Anordnung und ein Verfahren zum Befestigen des ersten Turbomaschinenelements an dem zweiten Turbomaschinenelement.

Die Verbindungstechnik spielt im Maschinenbau seit jeher eine enorme Rolle. Bei der Gestaltung der Verbindung zweier Maschinenelemente sind viele Faktoren zu betrachten, wie beispielsweise die Werkstoffeigenschaften der beiden Maschinenelemente, Anforderungen hinsichtlich übertragbarer Kräfte, Momente und dergleichen. Ein weiterer wichtiger Aspekt sind die Umgebungsbedingungen, welchen die Verbindung während ihrer Lebensdauer ausgesetzt ist. Große Anforderungen ergeben sich in dieser Hinsicht beispielsweise bei hohen Temperaturen während des Betriebs einer Maschine, wie beispielsweise eine Turbomaschine, durch unterschiedliche Ausdehungskoeffizienten. Ebenfalls ergeben sich Herausforderungen, wenn die unterschiedlichen Bauelemente verschiedenen Temperaturen ausgesetzt sind, so dass sich eine Komponente stärker ausdehnt als die andere.

Diesem Problem wird auf zwei grundsätzlich verschiedenen Arten und Weisen begegnet: Zum einen kann Ausgleich der Wärmedehnungen über die Flexibilität (d.h., die elastische Verformung) der Maschinenelemente erfolgen, was jedoch häufig ungeeignet ist bei sehr hohen Temperaturen, da eine zusätzliche Last auf das bzw. die Maschinenelemente entsteht. Weiterhin ist dieser Ansatz in der Regel nur für kleinere Bewegungen geeignet.

Weiterhin ist ein Ausgleich über Schiebesitze bekannt, beispielsweise aus der US 5,127,224 A. In dieser ist gezeigt, wie ein erstes Element in Form eines Gabelkopfes mit einem zweiten Element in Form eines Halters mit einer rechteckförmigen Durchgangsöffnung über einen Bolzen und einen Gleitstein ("slider") verbunden ist. Der Gleitstein wird dabei in der rechteckförmigen Durchgangsöffnung verschiebbar gehalten, während er zwischen den beiden Schenkeln des U-förmigen Halters gehalten wird.

Ein weiteres Beispiel einer Verbindungsanordnung ist aus der US5848874A bekannt, die eine Verbindungsanordnung mit zwei Turbomaschinenbauteilen und einer Hülse offenbart..

Aufgabe der vorliegenden Erfindung ist es, eine verbesserte Anordnung mit zwei Maschinenelementen, insbesondere Turbomaschinenelementen, bereitzustellen.

Diese Aufgabe wird gelöst durch eine Anordnung nach Anspruch 1, eine Turbomaschine nach Anspruch 11, ein Verfahren nach Anspruch 12 sowie eine Verwendung der Anordnung in einer Turbomaschine nach Anspruch 14.

Eine erfindungsgemäße Anordnung weist auf: ein erstes Turbomaschinenelement mit einer ersten Turbomaschinenelement-Durchgangsöffnung, ein zweites Turbomaschinenelement, ein Gleitelement mit einer Gleitelement-Durchgangsöffnung, das zumindest teilweise in der ersten Turbomaschinenelement-Durchgangsöffnung angeordnet ist, eine Hülse, welche die Gleitelementdurchgangsöffnung entlang einer Durchsteckachse durchgreift und ein Befestigungsmittel, welches die Hülse durchgreift, und durch das die Hülse an dem zweiten Turbomaschinenelement befestigbar, insbesondere befestigt, ist bzw. wird bzw. das hierzu ausgebildet bzw. eingerichtet ist.

Dies ist nach einer Ausführung insbesondere vorteilhaft, da der Kraftschluss zwischen Befestigungsmittel, Hülse und zweitem Turbomaschinenelement erfolgt. Nach einer Ausführung ist das erste Turbomaschinenelement nicht verspannt und kann sich in Rotationsrichtung um die Durchsteckachse und/oder längs der Durchsteckachse wenigstens im Wesentlichen frei bewegen.

Nach einer Ausführung ist die Hülse ein rotationssymmetrischer Hohlkörper, welcher in Richtung der Durchsteckachse länger ist als die Ausdehnung des Gleitelements, d.h., die Hülse steht zumindest auf einer Seite, insbesondere auf beiden Seiten, über das Gleitelement hinaus. Hierdurch kann nach einer Ausführung erreicht werden, dass eine vom Befestigungsmittel aufgebrachte Spannkraft entlang der Durchsteckachse zumindest wenigstens im Wesentlichen, insbesondere vollständig, über die Hülse zu dem zweiten Turbomaschinenelement übertragen wird und nicht über das Gleitelement und/oder das erste Turbomaschinenelement.

Nach einer Ausführung ist die Hülse als Hohlzylinder, d.h., ohne etwaige Überstände, ausgebildet. Alternativ kann die Hülse nach einer Weiterbildung an einem oder beiden Enden einen flanschartigen Kragen aufweisen. Dies ist insbesondere vorteilhaft, da hierdurch die Krafteinleitung bzw. -ausleitung an den Enden der Hülse verbessert ist.

Nach einer Ausführung ist das Gleitelement mit einer Gleitelementdurchgangsöffnung in Form eines Rundlochs versehen. Dies ist insbesondere vorteilhaft, um ein Spiel zwischen Gleitelement und Hülse gering zu halten.

Nach einer Ausführung weist das Gleitelement ein Material auf aus der Gruppe, aufweisend: Eisenbasiswerkstoff, Kobaltbasiswerkstoff, Nickelbasiswerkstoff, Stahl und Keramik.

Nach einer Ausführung ist das erste Turbomaschinenelement und/oder das zweite Turbomaschinenelement eine Komponente einer Turbomaschine, insbesondere einer Gasturbine, insbesondere eines Flugtriebwerks, insbesondere eines Gehäuseelements, insbesondere zur Definition eines Gaskanals.

Die erste Turbomaschinenelement-Durchgangsöffnung weist ein Langloch auf, in dem das Gleitelement entlang einer Verschiebeachse senkrecht zur Durchsteckachse verschiebbar, insbesondere formschlüssig verschiebbar geführt, ist. In einer Weiterbildung ist die erste Turbomaschinenelement-Durchgangsöffnung ein Langloch.

Dies ist nach einer Ausführung insbesondere vorteilhaft, da auf diese Weise die Bewegung der beiden Turbomaschinenelemente in Richtung der Verschiebeachse zueinander zwar möglich, aber dennoch begrenzt wird. So ist es möglich, beispielsweise thermisch bedingte Spannungen auszugleichen und trotzdem stets eine sichere Verbindung der beiden Fügepartner, d.h. der beiden Turbomaschinenelemente, zu gewährleisten.

Nach einer Weiterbindung weist das Gleitelement ein Paar ebener Kontaktflächen zur formschlüssigen Führung entlang der Verschiebeachse auf, welche mit entsprechenden, insbesondere ebenen, Kontaktflächen des Langlochs in Eingriff stehen.

Dies ist nach einer Ausführung insbesondere vorteilhaft, da hierdurch eine Kraft, welche in Richtung einer Querachse, die senkrecht zur Durchsteckachse und senkrecht zur Verschiebeachse ausgerichtet ist, wirkt, nicht punktförmig oder entlang einer Berührlinie vom ersten Turbomaschinenelement auf das Gleitelement übertragen wird, sondern vollflächig im Bereich der, insbesondere ebenen, Kontaktflächen. Hierdurch wird die mechanische Belastung von Turbomaschinenelement und Gleitelement reduziert, was zur Erhöhung der Sicherheit und/oder zur Verminderung der Anforderungen an die Werkstoffe führt, aus denen erstes Turbomaschinenelement und/oder Gleitelement gebildet sind.

Nach einer Ausführung ist das Gleitelement, insbesondere um die Durchsteckachse, drehbar auf der Hülse gelagert.

Dies ist nach einer Ausführung insbesondere vorteilhaft, da hierdurch eine Relativbewegung der beiden Turbomaschinenelemente zueinander um die Durchsteckachse als Rotationsachse ermöglicht wird. Auch diese Maßnahme dient der Reduzierung von übertragenen Kräften und insbesondere von Spannungen zwischen den Fügepartnern.

Nach einer Ausführung spannt das Befestigungsmittel die Hülse gegen das zweite Turbomaschinenelement.

Dies ist nach einer Ausführung insbesondere vorteilhaft, da somit die mechanische Verbindung der beiden Turbomaschinenelemente in Durchsteckrichtung, d.h. in Richtung der Durchsteckachse, in einer Ausführung über die Hülse erfolgt und zumindest wenigstens im Wesentlichen nicht über das Gleitelement und/oder zumindest wenigstens im Wesentlichen nicht direkt über das erste Turbomaschinenelement. Das erste Turbomaschinenelement wird nach einer Ausführung in Durchsteckrichtung zwischen dem zweiten Turbomaschinenelement und dem Befestigungsmittel mit Spiel gehalten.

Nach einer Ausführung ist das erste Turbomaschinenelement, insbesondere auf der Hülse und/oder dem Gleitelement, zwischen dem zweiten Turbomaschinenelement und einem Anschlag entlang der Durchsteckachse verschiebbar, der durch das Befestigungsmittel gegen die Hülse gespannt ist und zerstörungsfrei oder nicht-zerstörungsfrei lösbar mit dem Befestigungsmittel verbunden, insbesondere integral ausgebildet, ist.

Dieser Anschlag ist nach einer Ausführung hinsichtlich seiner Abmessungen so dimensioniert, dass er zumindest in einer Erstreckungsrichtung über die Abmessungen des Gleitelements hinausgeht. So wird vermieden, dass das erste Turbomaschinenelement in Richtung der Durchsteckachse von dem Gleitelement herunterrutschen kann. Zusätzlich oder alternativ ist zumindest ein Ende des Befestigungsmittels, insbesondere ein Kopf, und/oder ein Sicherungsmittel, insbesondere in Form einer Mutter, dergestalt ausgebildet, dass dieses selbst in zumindest einer Erstreckungsrichtung über die Abmessungen des Gleitelements hinausgeht.

Dies ist nach einer Ausführung insbesondere vorteilhaft, da hierdurch eine Relativbewegung der beiden Turbomaschinenelemente zueinander entlang der Durchsteckachse ermöglicht wird. Auch diese Maßnahme dient der Reduzierung von übertragenen Kräften und insbesondere von Spannungen zwischen den Fügepartnern. Nach einer Ausführung ist das Spiel durch das zweite Turbomaschinenelement und den Anschlag begrenzt. Somit ist ein Ausgleich thermisch und/oder mechanisch induzierter Spannungen zumindest teilweise möglich, während zugleich eine sichere Befestigung der beiden Fügepartner aneinander gewährleistet ist.

Nach einer Ausführung verhindert eine form- und/oder kraftschlüssige Verbindung zwischen dem ersten Turbomaschinenelement und dem zweiten Turbomaschinenelement zumindest teilweise eine Relativbewegung zwischen dem ersten Turbomaschinenelement und dem zweiten Turbomaschinenelement entlang einer Querachse senkrecht zu der Durchsteckachse und senkrecht zu der Verschiebeachse.

Dies ist nach einer Ausführung insbesondere vorteilhaft, da hierdurch eine Relativbewegung der Fügepartner in Richtung der Querachse definiert unterbunden wird. Aufgrund der Anordnung des Befestigungsmittels innerhalb der Hülse und zumindest teilweise innerhalb des zweiten Turbomaschinenelements führt eine Kraft auf einen der Fügepartner in Querrichtung, d.h. entlang der Querachse, zu einer Scherbeanspruchung des Verbindungsmittels, welche diese aufgrund fehlender Freiheitsgrade zumindest wenigstens im Wesentlichen vollständig kompensieren und/oder an den anderen Fügepartner übertragen muss. Dies erfolgt insbesondere über die oben bereits erläuterten ebenen Kontaktflächen. Weiterhin ist nach einer Ausführung vorteilhaft, dass zumindest das erste Turbomaschinenelement die Scherbeanspruchung nicht in Form einer Punkt- oder Linienlast aufnehmen können muss, sondern eine flächige Kraftübertragung realisiert werden kann, was bei der Wahl des Materials des ersten Turbomaschinenelements und/oder des Gleitelements zu Einsparungen und/oder zu größeren Sicherheitsfaktoren und/oder zu weniger Verschleiß führt.

Nach einer Ausführung weist das zweite Turbomaschinenelement eine zweite einseitig oder beidseitig offene Turbomaschinenelement-Öffnung auf, in die das Befestigungsmittel eingreift.

Die zweite Turbomaschinenelement-Öffnung ist nach einer Ausführung als Sackloch und in einer anderen Ausführung als Durchgangsöffnung ausgebildet, insbesondere (jeweils) zum Einschrauben des Befestigungsmittels. Die Ausführung als Sackloch ist vorteilhaft, da auf der der Verbindungsstelle gegenüberliegenden Seite des zweiten Turbomaschinenelements keine überstehenden Komponenten vorgesehen werden müssen. Die Ausführung als Durchgangsöffnung ist vorteilhaft, da diese einfach hergestellt werden kann und eine Abstützung des Befestigungsmittels auf der der Verbindungsstelle gegenüberliegenden Seite des zweiten Turbomaschinenelements ermöglicht.

Nach einer Ausführung weist das Befestigungsmittel einen Bolzen mit einem Bolzenkopf oder eine Schraube mit einem Gewinde und/oder einem Schraubenkopf, insbesondere mit einer oder zwei mit der Schraube verschraubten Muttern, auf. Insbesondere ist das Befestigungsmittel durch den Bolzen mit dem Bolzenkopf oder der Schraube mit dem Gewinde und/oder dem Schraubenkopf, insbesondere mit der einem oder zwei mit der Schraube verschraubten Muttern, gebildet.

Nach einer Ausführung ist zwischen dem Befestigungsmittel und der Hülse ein ein- oder mehrteilig ausgebildetes Kraftverteilungselement angeordnet, welches insbesondere auf das Befestigungsmittel aufgesteckt ist. Nach einer Ausführung weist das Kraftverteilungselement wenigstens eine Beilagscheibe auf.

Dies ist nach einer Ausführung insbesondere vorteilhaft, da hierdurch die durch das Befestigungsmittel aufgebrachte Spannkraft besser verteilt wird. Eine Krafteinleitung über eine begrenzte Fläche, insbesondere des Bolzen- oder Schraubenkopfes und/oder der Mutter, wird somit vermieden, was bei der Wahl des Materials des Befestigungsmittels und/oder der Hülse zu Einsparungen und/oder zu größeren Sicherheitsfaktoren führt.

Eine erfindungsgemäße Turbomaschine, insbesondere Gasturbine, insbesondere eines Flugtriebwerks, weist nach einer Ausführung eine Anordnung der hier beschriebenen Art auf.

In einer bevorzugten Ausführung der Erfindung weisen das erste Turbomaschinenelement und das zweite Turbomaschinenelement jeweils eine im Wesentlichen kreisringförmige Gestalt auf, wobei sie vorzugsweise konzentrisch um eine Maschinenachse der Turbomaschine angeordnet sind. Die beiden Turbomaschinenelemente können in diesem Fall mittels wenigstens drei, vorzugweise im Wesentlichen gleichmäßig um den Umfang verteilten, Verbindungsanordnungen, von denen jede Verbindungsanordnung eine zuvor beschriebene erste Turbomaschinenelement-Durchgangsöffnung, ein zuvor beschriebenes Gleitelement, eine zuvor beschriebene Hülse und ein zuvor beschriebenes Befestigungsmittel aufweist, verbunden sein, so dass hierdurch eine speichenzentrierte Lagerung der beiden Turbomaschinenelemente relativ zueinander gewährleistet wird. Dies ermöglicht auf vorteilhafte Weise eine im Wesentlichen spannungsfreie thermische Ausdehnung, insbesondere in radialer Richtung bezogen auf die Maschinenachse der Turbomaschine, bei gleichzeitig sicherer Halterung einer der beiden Turbomaschinenelemente relativ zum anderen Turbomaschinenelement.

Für weitere Vorzüge und weitere Ausführungen der Turbomaschine mit einer solchen Anordnung wird auf die hier beschrieben Ausführungen der Anordnung und deren jeweils erläuterte Vorteile verwiesen.

Ein erfindungsgemäßes Verfahren zum Befestigen des ersten Turbomaschinen-Elements an dem zweiten Turbomaschinen-Element der Anordnung der hier beschriebenen Art weist nach einer Ausführung die Schritte auf:
(a) Anordnen des Gleitelements zumindest teilweise in der ersten Turbomaschinenelement-Durchgangsöffnung;
(b) Anordnen der Hülse zumindest teilweise in der Gleitelement-Durchgangsöffnung;
(c) Anordnen des zweiten Turbomaschinenelements an dem ersten Turbomaschinenelement; und
(d) Befestigten der Hülse an dem zweiten Turbomaschinenelement mit dem Befestigungsmittel.

Die oben erläuterten Schritte sind nicht auf die wiedergegebene Reihenfolge beschränkt. Insbesondere kann der Schritt (b) vor dem Schritt (a) erfolgen, beispielsweise indem die Hülse mit dem Gleitelement verbunden wird bevor dieser Verbund in der ersten Turbomaschinenelement-Durchgangsöffnung zumindest teilweise angeordnet wird, insbesondere durch eine Erzeugung wenigstens einer Kontaktfläche an der Hülse zum Kontakt mit dem zweiten Turbomaschinenelement und/oder dem Anschlag und/oder dem Befestigungsmittel auf in Durchsteckrichtung einer oder beiden Seiten des Gleitelements.

Insbesondere erfolgt Schritt (c) vor Schritt (a) und/oder (b), wenn zuerst die beiden Turbomaschinenelemente aneinander angeordnet werden bevor das Gleitelement und/oder die Hülse und/oder der oben beschriebene Verbund in die erste Turbomaschinenelement-Durchgangsöffnung eingesetzt wird.

Dies ist nach einer Ausführung insbesondere vorteilhaft, da auf diese Weise sehr einfach eine Verbindung der beiden Turbomaschinenelemente miteinander erzeugt werden kann, insbesondere ohne aufwändige Fügeverfahren wie Kleben, Schweißen, Löten und dergleichen. Nach einer Ausführung ist die Befestigung durch das Befestigungsmittel zerstörungsfrei lösbar, was insbesondere bei Montage- und/oder Wartungsarbeiten vorteilhaft ist.

Für weitere Vorzüge und Ausführungen des Verfahrens mit einer solchen Anordnung wird zusätzlich auf die hier beschrieben Ausführungen der Anordnung und deren jeweils erläuterte Vorteile verwiesen.

Nach einer Ausführung spannt das Befestigungsmittel die Hülse durch das Befestigen gegen das zweite Turbomaschinenelement.

Dies ist nach einer Ausführung insbesondere vorteilhaft, da somit die mechanische Verbindung der beiden Turbomaschinenelemente in Durchsteckrichtung, d.h. in Richtung der Durchsteckachse, über die Hülse erfolgt und zumindest wenigstens im Wesentlichen nicht über das Gleitelement und/oder zumindest wenigstens im Wesentlichen nicht direkt über das erste Turbomaschinenelement. Das erste Turbomaschinenelement wird nach einer Ausführung in Durchsteckrichtung zwischen dem zweiten Turbomaschinenelement und dem Befestigungsmittel mit Spiel gehalten,

Eine erfindungsgemäße Verwendung der hier beschriebenen Anordnung in einer Turbomaschine, führt dazu, dass
das erste Turbomaschinenelement relativ zu dem zweiten Turbomaschinenelement entlang der Durchsteckachse zwischen diesem und einem Anschlag und/oder dem Befestigungsmittel verschiebbar ist und/oder
das erste Turbomaschinenelement relativ zu dem zweiten Turbomaschinenelement entlang einer Verschiebeachse senkrecht zur Durchsteckachse verschiebbar, insbesondere formschlüssig verschiebbar, insbesondere in einem Langloch, geführt, ist und/oder
das erste Turbomaschinenelement relativ zu dem zweiten Turbomaschinenelement entlang einer Querachse senkrecht zur Verschiebeachse und senkrecht zur Durchsteckachse wenigstens im Wesentlichen nicht verschiebbar ist.

Dies ist nach einer Ausführung insbesondere vorteilhaft, da somit auf einfache Weise eine Verbindung zwischen dem ersten Turbomaschinenelement und dem zweiten Turbomaschinenelement bereitgestellt werden kann, welche in definierten Freiheitsgraden in einem vorgegebenem Maße dafür eingerichtet ist, thermisch und/oder mechanisch induzierte Spannungen zumindest teilweise zu kompensieren und/oder zumindest nur in begrenztem Maß von dem einen Turbomaschinenelement auf das andere Turbomaschinenelement zu übertragen. Gleichzeitig wird eine Relativbewegung der Turbomaschinenelemente zueinander in definierten Freiheitsgraden zumindest teilweise, insbesondere wenigstens im Wesentlichen vollständig, unterbunden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine dreidimensionale Ansicht eines Gleitelements einer Anordnung nach einer Ausführung der vorliegenden Erfindung;
- Fig. 2: eine dreidimensionale Ansicht eines Teils der Anordnung, insbesondere ohne Hülse, wobei das Gleitelement nach Fig. 1 in einer ersten Turbomaschinenelement-Durchgangsöffnung angeordnet ist;
- Fig. 3: eine dreidimensionale Ansicht eines Teils der Anordnung, insbesondere des Gleitelements mit Hülse in der ersten Turbomaschinenelement-Durchgangsöffnung und zumindest einem Teil eines Befestigungsmittels nach einer Ausführung der vorliegenden Erfindung;
- Fig. 4: eine dreidimensionale Ansicht der Anordnung nach einer Ausführung der vorliegenden Erfindung im montierten Zustand; und
- Fig. 5: zeigt eine Schnittdarstellung der Anordnung nach einer Ausführung der vorliegenden Erfindung im montierten Zustand.

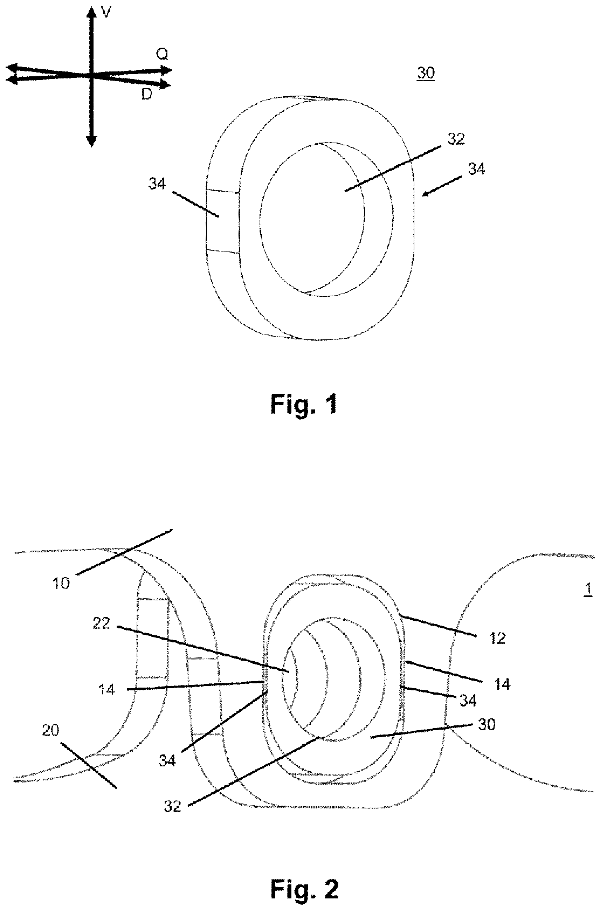

Fig. 1 zeigt eine dreidimensionale Ansicht eines Gleitelements 30 einer Anordnung 1 nach einer Ausführung der vorliegenden Erfindung. Das Gleitelement 30 weist eine Gleitelement-Durchgangsöffnung 32 und ein Paar paralleler, ebener Kontaktflächen 34 auf. Die Erstreckungsrichtung der Gleitelement-Durchgangsöffnung 32 definiert eine Durchsteckachse D und eine Durchsteckrichtung. Senkrecht zu der Durchsteckachse D erstreckt sich eine Querachse Q und eine Querrichtung. Die Querachse Q steht jeweils senkrecht auf den beiden parallelen, ebenen Kontaktflächen 34. Eine Erstreckungsrichtung der beiden parallelen, ebenen Kontaktflächen 34 definiert eine Verschiebeachse V und eine Verschieberichtung, welche von der Durchsteckrichtung verschieden sind, welche jeweils senkrecht zu der Durchsteckachse D und der Querachse Q ausgerichtet sind.

Fig. 2 zeigt eine dreidimensionale Ansicht eines Teils der Anordnung 1, insbesondere ohne Hülse, wobei das Gleitelement 30 nach Fig. 1 in einer ersten Turbomaschinenelement-Durchgangsöffnung 12 eines ersten Turbomaschinenelements 10 angeordnet ist.

Das Gleitelement 30 ist zumindest teilweise in der ersten Turbomaschinenelement-Durchgangsöffnung 12 des ersten Turbomaschinenelements angeordnet. Die erste Turboelement-Durchgangsöffnung 12 ist in Form eines Langlochs ausgebildet. Das Paar paralleler, ebener Kontaktflächen 34 des Gteitelements 30 steht dabei in Eingriff mit einem Paar ebener, paralleler Kontaktflächen 14 des ersten Turbomaschinenelements 10. Die Kontaktflächen 14 des ersten Turbomaschinenelements sind dabei wenigstens in einem Bereich wenigstens im Wesentlichen parallel zu den Kontaktflächen 34 des Gleitelements 30.

Perspektivisch aus Sicht der Fig. 2 betrachtet hinter dem ersten Turbomaschinenelement 10 ist ein zweites Turbomaschinenelement 20 angeordnet. Das zweite Turbomaschinenelement 20 weist eine zweite Turbomaschinenelement-Öffnung 22 in Form einer zweiten Turbomaschinenelement-Durchgangsöffnung auf. Die zweite Turbomaschinenelement-Durchgangsöffnung ist in der Ausführung der Fig. 2 als Rundloch ausgebildet.

Durch die Ausgestaltung von erster Turboelement-Durchgangsöffnung 12 in Form eines Langlochs und des Gleitelements 30 wird eine formschlüssige Führung des Gleitelements 30 innerhalb des Langlochs bereitgestellt, welche eine Relativbewegung von Gleitelement 30 und ersten Turbomaschinenelement 10 wenigstens im Wesentlichen ausschließlich in Richtung der Verschiebeachse V zulässt. Die Relativbewegung wird durch die Abmessungen des Langlochs begrenzt.

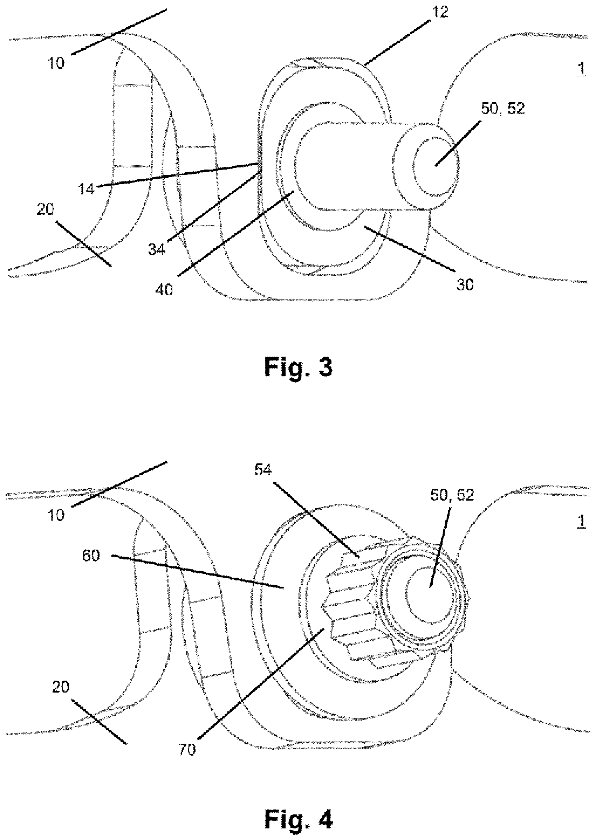

Fig. 3 zeigt eine dreidimensionale Ansicht eines Teils der Anordnung 1, insbesondere des Gleitelements 30 mit einer Hülse 40 in der ersten Turbomaschinenelement-Durchgangsöffnung 12 und zumindest einem Teil eines Befestigungsmittels 50, 52 nach einer Ausführung der vorliegenden Erfindung in einem teilweise montierten Zustand.

Die Hülse 40 durchgreift die Gleitelement-Durchgangsöffnung 32 und ist in Durchsteckrichtung D beidseitig in Form eines Flanschs erweitert. Dieser Flansch wird beispielsweise durch Anfügen und/oder Umformen eines Bereichs der Hülse 40 gebildet.

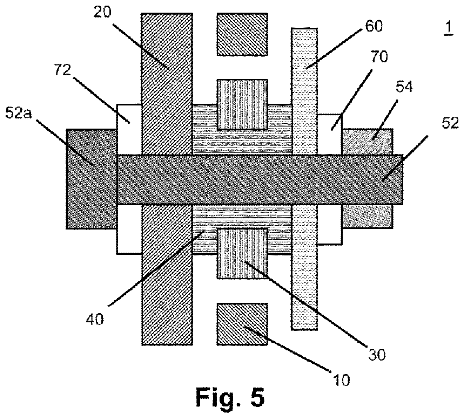

Das Befestigungsmittel 50 in Form einer Schraube 52 durchgreift die Hülse 40. Nach einer Ausführung wird das Befestigungsmittel 50 in Blickrichtung gesehen "von hinten" entlang der Durchsteckachse D zuerst in die zweite Turboelement-Durchgangsöffnung 22 eingeführt, insbesondere bis ein Bolzen- oder Schraubenkopf (s. Fig. 5) mittelbar oder unmittelbar an dem zweiten Turbomaschinenelement 20 anliegt. Während des Einführens durchgreift das Befestigungsmittel 50 die Hülse 40 wie oben erläutert. Das zweite Turbomaschinenelement 20 liegt dabei direkt oder indirekt an der Hülse 40 an.

Fig. 4 zeigt eine dreidimensionale Ansicht der Anordnung 1 nach einer Ausführung der vorliegenden Erfindung im montierten Zustand. Hierbei ist auf das aus der Hülse 40 in Blickrichtung gesehen nach vorne herausragende Ende des Befestigungsmittels 50 ein Anschlag 60 aufgesteckt. Dieser Anschlag 60 ist hinsichtlich seiner Abmessungen so dimensioniert, dass er zumindest in einer Erstreckungsrichtung über die Abmessungen des Gleitelements 30 hinausgeht. So wird vermieden, dass das erste Turbomaschinenelement 10 in Richtung der Durchsteckachse D von dem Gleitelement 30 herunterrutschen kann.

Weiterhin ist auf das Befestigungsmittel 50 nach dem Anschlag 60 ein Kraftverteilungselement 70 in Form einer Beilagscheibe aufgesteckt.

Die übrigen Teile der Anordnung 1 werden durch eine Mutter 54, welche auf das Befestigungsmittel 50 in Form einer Schraube 52 aufgeschraubt ist, kraft- und/oder reib- und/oder formschlüssig gehalten, insbesondere gesichert, insbesondere vor einer unbegrenzten Relativbewegung entlang der Durchsteckachse D gesichert.

Fig. 5 zeigt eine Schnittdarstellung einer Anordnung nach einer Ausführung der vorliegenden Erfindung im montierten Zustand. Die Abmessungen der Zwischenräume zwischen dem ersten Turbomaschinenelement 10 und dem zweiten Turbomaschinenelement 20 und/oder zwischen dem ersten Turbomaschinenelement 10 und dem Anschlag 60 sind dabei explizit als schematisch dargestellt zu verstehen. Hinsichtlich dieses Aspekts lassen sich der Darstellung keine einschränkenden Aussagen über die Dimensionierung ableiten, da sich diese an den jeweiligen Anforderungen und/oder Umgebungsbedingungen am Einbauort orientiert.

Fig. 5 zeigt im Wesentlichen den oben beschriebenen Aufbau der Anordnung 1, weshalb auf die obigen Ausführungen verwiesen wird, welche hier in gleicher Weise gelten, sollte sich für den Fachmann in offensichtlicher Weise nicht ein Anderes ergeben. In der Fig. 5 ist wie oben bereits durch den Verweis angedeutet, die Ausgestaltung der Hülse 40 nach einer Ausführungsform der vorliegenden Erfindung besonders gut zu erkennen: Die rotationssymmetrische Hülse 40 weist dabei an beiden Enden einen Flansch auf, welcher durch ein Umformen, insbesondere ein Umbiegen, überstehender Enden der Hülse gebildet wird. Hierdurch wird die Kraftübertragung entlang der Durchsteckachse D im Bereich des ersten Turbomaschinenelements 10 von der Hülse 40 übernommen, sodass das Gleitelement 30 und das erste Turbomaschinenelement 10 von dieser Krafteinwirkung wenigstens im Wesentlichen entlastet sind. Für das erste Turbomaschinenelement 10 gilt dies selbstverständlich nur, solange dieses nicht an dem zweiten Turbomaschinenelement 20 oder dem Anschlag 60 anliegt.

Ein zweites Kraftverteilungselement 72 in Form einer Beilagscheibe ist zwischen dem Schraubenkopf 52a und dem zweiten Turbomaschinenelement 20 angeordnet, um die Kraftübertragung zu verbessern.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

**Bezugszeichenliste**

| | |
|---|---|
| 1 | Anordnung |
| 10 | erstes Turbomaschinenelement |
| 12 | erste Turbomaschinenelement-Durchgangsöffnung |
| 14 | ebene Kontaktfläche des ersten Turbomaschinenelements 10 |
| 20 | zweites Turbomaschinenelement |
| 22 | zweite Turbomaschinenelement-Öffnung |
| 30 | Gleitelement |
| 32 | Gleitelement-Durchgangsöffnung |
| 34 | ebene Kontaktfläche des Gleitelements 30 |
| 40 | Hülse |
| 50 | Befestigungsmittel |
| 52 | Schraube |
| 52a | Schraubenkopf |
| 54 | Mutter |
| 60 | Anschlag |
| 70 | Kraftverteilungselement |
| 72 | zweites Kraftverteilungselement |
| D | Durchsteckachse |
| V | Verschiebeachse |
| Q | Querachse |

## Patentansprüche

1. Anordnung **(1),** aufweisend:
ein erstes Turbomaschinenelement **(10)** mit einer ersten Turbomaschinenelement-Durchgangsüffnung **(12),** die ein Langloch aufweist;
ein zweites Turbomaschinenelement **(20);**
ein Gleitelement **(30)** mit einer Gleitelement-Durchgangsöffnung **(32),** das zumindest teilweise in der ersten Turbomaschinenelement-Durchgangsöffnung **(12)** angeordnet ist und das in dem Langloch entlang einer Verschiebeachse **(V)** senkrecht zur Durchsteckachse **(D)** verschiebbar geführt ist;
eine Hülse **(40),** welche die Gleitelement-Durchgangsöffnung **(32)** entlang einer Durchsteckachse **(D)** durchgreift; und
ein Befestigungsmittel **(50),** welches die Hülse **(40)** durchgreift, zur Befestigung der Hülse **(40)** an dem zweiten Turbomaschinenelement **(20).**

2. Anordnung nach Anspruch 1, wobei das Gleitelement **(30)** in dem Langloch entlang der Verschiebeachse **(V)** formschlüssig verschiebbar geführt ist.

3. Anordnung nach Anspruch 2, wobei das Gleitelement **(30)** ein Paar ebener Kontaktflächen **(34)** zur formschlüssigen Führung entlang der Verschiebeachse **(V)** aufweist, welche mit entsprechenden, insbesondere ebenen, Kontaktflächen **(14)** des Langlochs in Eingriff stehen.

4. Anordnung nach einem der vorhergehenden Ansprüche, wobei das Gleitelement **(30),** insbesondere um die Durchsteckachse **(D),** drehbar auf der Hülse **(40)** gelagert ist.

5. Anordnung nach einem der vorhergehenden Ansprüche, wobei das Befestigungsmittel **(50)** die Hülse **(40)** gegen das zweite Turbomaschinenelement **(20)** spannt.

6. Anordnung nach einem der vorhergehenden Ansprüche, wobei das erste Turbomaschinenelement **(10),** insbesondere auf der Hülse **(40)** und/oder dem Gleitelement **(30)** zwischen dem zweiten Turbomaschinenelement **(20)** und einem Anschlag **(60)** entlang der Durchsteckachse **(D)** verschiebbar ist, der durch das Befestigungsmittel **(50)** gegen die Hülse **(40)** gespannt ist und zerstörungsfrei oder nicht-zerstörungsfrei lösbar mit dem Befestigungsmittel **(50)** verbunden, insbesondere integral ausgebildet, ist.

7. Anordnung nach einem der vorhergehenden Ansprüche, wobei eine form- und/oder kraftschlüssige Verbindung zwischen dem ersten Turbomaschinenelement **(10)** und dem zweiten Turbomaschinenelement **(20)** eine Relativbewegung zwischen dem ersten Turbomaschinenelement (**10**) und dem zweiten Turbomaschinenelement **(20)** entlang einer Querachse **(Q)** senkrecht zu der Durchsteckachse **(D)** und senkrecht zu der Verschiebeachse **(V)** wenigstens im Wesentlichen verhindert.

8. Anordnung nach einem der vorhergehenden Ansprüche, wobei das zweite Turbomaschinenelement **(20)** eine zweite einseitig oder beidseitig offene Turbomaschinenelement-Öffnung **(22)** aufweist, in die das Befestigungsmittel **(50)** eingreift.

9. Anordnung nach einem der vorhergehenden Ansprüche, wobei das Befestigungsmittel **(50)** einen Bolzen mit einem Bolzenkopf oder eine Schraube **(52)** mit einem Gewinde und/oder einem Schraubenkopf (**52a**), insbesondere mit einer oder zwei mit der Schraube **(52)** verschraubten Muttern **(54),** aufweist, insbesondere ist.

10. Anordnung nach Anspruch 9, wobei zwischen dem Befestigungsmittel (**50**) und der Hülse **(40)** ein Kraftverteilungselement **(70)** angeordnet ist, welches insbesondere auf das Befestigungsmittel **(50)** aufgesteckt ist.

11. Turbomaschine, insbesondere Gasturbine, insbesondere eines Flugtriebwerks, mit einer Anordnung nach einem der vorhergehenden Ansprüche.

12. Verfahren zum Befestigen eines ersten Turbomaschinen-Elements **(10)** an einem zweiten Turbomaschinen-Element **(20)** einer Anordnung **(1)** nach einem der Ansprüche 1 bis 10, aufweisend die Schritte:
(a) Anordnen des Gleitelements **(30)** zumindest teilweise in der ersten Turbomaschinenelement-Durchgangsöffnung **(12);**
(b) Anordnen der Hülse **(40)** zumindest teilweise in der Gleitelement-Durchgangsöffnung **(32)**;
(c) Anordnen des zweiten Turbomaschinenelements **(20)** an dem ersten Turbomaschinenelement **(10);** und
(d) Befestigten der Hülse **(40)** an dem zweiten Turbomaschinenelement **(20)** mit dem Befestigungsmittel **(50).**

13. Verfahren nach Anspruch 12, wobei das Befestigungsmittel **(50)** die Hülse **(40)** durch das Befestigen gegen das zweite Turbomaschinenelement **(20)** spannt.

14. Verwendung einer Anordnung nach einem der Ansprüche 1 bis 10 in einer Turbomaschine, wobei
das Gleitelement **(30)** um die Durchsteckachse **(D)** drehbar auf der Hülse **(40)** gelagert ist, so dass das erste Turbomaschinenelement **(10)** relativ zu dem zweiten Turbomaschinenelement **(20)** entlang der Durchsteckachse **(D)** zwischen diesem **(20)** und einem Anschlag **(60)** und/oder dem Befestigungsmittel **(50)** verschiebbar ist; und
das Gleitelement **(30)** ein Paar ebener Kontaktflächen **(34)** zur formschlüssigen Führung entlang der Verschiebeachse **(V)** aufweist, welche mit entsprechenden Kontaktflächen **(14)** des Langlochs in Eingriff stehen, so dass das erste Turbomaschinenelement **(10)** relativ zu dem zweiten Turbomaschinenelement **(20)** entlang einer Querachse **(Q)** senkrecht zur Verschiebeachse **(V)** und senkrecht zur Durchsteckachse **(D)** wenigstens im Wesentlichen nicht verschiebbar ist.

## Claims

1. Arrangement (1), comprising:
a first turbomachine element (10) having a first turbomachine element through-opening (12) which comprises a slot;
a second turbomachine element (20);
a sliding element (30) having a sliding element through-opening (32), which element is at least partially arranged in the first turbomachine element through-opening (12) and is movably guided in the slot along an axis of movement (V) perpendicular to the through-axis (D);
a sleeve (40) which passes through the sliding element through-opening (32) along a through-axis (D); and
a fastener (50), which passes through the sleeve (40), in order to fasten the sleeve (40) to the second turbomachine element (20).

2. Arrangement according to claim 1, wherein the sliding element (30) is movably guided in the slot along the axis of movement (V) in a form-fitting manner.

3. Arrangement according to claim 2, wherein the sliding element (30) comprises a pair of planar contact surfaces (34) for guiding along the axis of movement (V) in a form-fitting manner, which surfaces engage with corresponding, in particular planar, contact surfaces (14) of the slot.

4. Arrangement according to any of the preceding claims, wherein the sliding element (30) is mounted on the sleeve (40) so as to be rotatable, in particular about the through-axis (D).

5. Arrangement according to any of the preceding claims, wherein the fastener (50) clamps the sleeve (40) against the second turbomachine element (20).

6. Arrangement according to any of the preceding claims, wherein the first turbomachine element (10), in particular on the sleeve (40) and/or the sliding element (30), is movable between the second turbomachine element (20) and a stop (60) along the through-axis (D), which stop is clamped against the sleeve (40) by the fastener (50) and is connected to the fastener (50), in particular integrally formed therewith, such that said stop can be released in a non-destructive or destructive manner.

7. Arrangement according to any of the preceding claims, wherein a form-fitting and/or force-fitting connection between the first turbomachine element (10) and the second turbomachine element (20) at least substantially prevents a relative movement between the first turbomachine element (10) and the second turbomachine element (20) along a transverse axis (Q) perpendicular to the through-axis (D) and perpendicular to the axis of movement (V).

8. Arrangement according to any of the preceding claims, wherein the second turbomachine element (20) comprises a second turbomachine element opening (22) which is open on one or both sides, into which opening the fastener (50) engages.

9. Arrangement according to any of the preceding claims, wherein the fastener (50) comprises, in particular is, a bolt which has a bolt head, or a screw (52) which has a thread and/or a screw head (52a), in particular has one or two nuts (54) screwed to the screw (52).

10. Arrangement according to claim 9, wherein a force distribution element (70) is arranged between the fastener (50) and the sleeve (40), which element is in particular attached onto the fastening means (50).

11. Turbomachine, in particular a gas turbine, in particular of an aircraft engine, having an arrangement according to any of the preceding claims.

12. Method for fastening a first turbomachine element (10) to a second turbomachine element (20) of an arrangement (1) according to any of claims 1 to 10, comprising the steps of:
(a) arranging the sliding element (30) at least partially in the first turbomachine element through-opening (12);
(b) arranging the sleeve (40) at least partially in the sliding element through-opening (32);
(c) arranging the second turbomachine element (20) on the first turbomachine element (10); and
(d) fastening the sleeve (40) to the second turbomachine element (20) using the fastener (50).

13. Method according to claim 12, wherein the fastener (50) clamps the sleeve (40) against the second turbomachine element (20) by fastening.

14. Use of an arrangement according to any of claims 1 to 10 in a turbomachine, wherein
the sliding element (30) is mounted on the sleeve (40) so as to be rotatable about the through-axis (D) such that the first turbomachine element (10) is movable relative to the second turbomachine element (20) along the through-axis (D) between said turbomachine element (20) and a stop (60) and/or the fastener (50); and
the sliding element (30) comprises a pair of planar contact surfaces (34) for guiding along the axis of movement (V) in a form-fitting manner, which surfaces engage with corresponding contact surfaces (14) of the slot, such that the first turbomachine element (10) is at least substantially not movable relative to the second turbomachine element (20) along a transverse axis (Q) perpendicular to the axis of movement (V) and perpendicular to the through-axis (D).

## Revendications

1. Système (1) comprenant :
un premier élément de turbomachine (10) ayant une première ouverture de passage d'élément de turbomachine (12) présentant un trou allongé ;
un second élément de turbomachine (20) ;
un élément coulissant (30) ayant une ouverture de passage d'élément coulissant (32), lequel élément coulissant est disposé au moins partiellement dans la première ouverture de passage d'élément de turbomachine (12) et est guidé de manière déplaçable dans le trou allongé le long d'un axe de déplacement (V) perpendiculaire à l'axe de passage (D) ;
un manchon (40) qui traverse l'ouverture de passage de l'élément coulissant (32) le long d'un axe de passage (D) ; et
un moyen de fixation (50) qui traverse le manchon (40) pour fixer le manchon (40) au second élément de turbomachine (20).

2. Système selon la revendication 1, dans lequel l'élément coulissant (30) est guidé de manière déplaçable solidairement dans le trou allongé le long de l'axe de déplacement (V).

3. Système selon la revendication 2, dans lequel l'élément coulissant (30) présente une paire de surfaces de contact planes (34) pour un guidage solidaire le long de l'axe de déplacement (V), lesquelles surfaces de contact viennent en prise avec des surfaces de contact (14) correspondantes du trou allongé, en particulier planes.

4. Système selon l'une des revendications précédentes, dans lequel l'élément coulissant (30) est monté rotatif sur le manchon (40), en particulier autour de l'axe de passage (D).

5. Système selon l'une des revendications précédentes, dans lequel le moyen de fixation (50) serre le manchon (40) contre le second élément de turbomachine (20).

6. Système selon l'une des revendications précédentes, dans lequel le premier élément de turbomachine (10) est déplaçable, en particulier sur le manchon (40) et/ou l'élément coulissant (30), entre le second élément de turbomachine (20) et une butée (60) le long de l'axe de passage (D), laquelle butée est serrée contre le manchon (40) par le moyen de fixation (50) et est reliée de façon amovible avec ou sans destruction au moyen de fixation (50), en particulier réalisée d'un seul tenant.

7. Système selon l'une des revendications précédentes, dans lequel une liaison solidaire et/ou par friction entre le premier élément de turbomachine (10) et le second élément de turbomachine (20) empêche au moins sensiblement un mouvement relatif entre le premier élément de turbomachine (10) et le second élément de turbomachine (20) le long d'un axe transversal (Q) perpendiculaire à l'axe de passage (D) et perpendiculaire à l'axe de déplacement (V).

8. Système selon l'une des revendications précédentes, dans lequel le second élément de turbomachine (20) présente une seconde ouverture d'élément de turbomachine (22) qui est ouverte sur un ou les deux côtés et dans laquelle le moyen de fixation (50) s'engage.

9. Système selon l'une des revendications précédentes, dans lequel le moyen de fixation (50) comprend, est notamment, un boulon ayant une tête de boulon, ou une vis (52) ayant un filetage et/ou une tête de vis (52a), ayant en particulier avec un ou deux écrous (54) vissés sur la vis (52).

10. Système selon la revendication 9, dans lequel un élément de répartition des forces (70) est disposé entre le moyen de fixation (50) et le manchon (40), lequel élément de répartition des forces est notamment enfiché sur le moyen de fixation (50).

11. Turbomachine, en particulier turbine à gaz, en particulier d'un moteur d'aéronef, comportant un système selon l'une des revendications précédentes.

12. Procédé de fixation d'un premier élément de turbomachine (10) à un second élément de turbomachine (20) d'un système (1) selon l'une des revendications 1 à 10, comprenant les étapes consistant à :
(a) disposer l'élément coulissant (30) au moins partiellement dans la première ouverture de passage d'élément de turbomachine (12) ;
(b) disposer le manchon (40) au moins partiellement dans l'ouverture de passage de l'élément coulissant (32) ;
(c) disposer le second élément de turbomachine (20) sur le premier élément de turbomachine (10) ; et à
(d) fixer le manchon (40) sur le second élément de turbomachine (20) en utilisant le moyen de fixation (50).

13. Procédé selon la revendication 12, dans lequel le moyen de fixation (50) serre le manchon (40) par fixation contre le second élément de turbomachine (20).

14. Utilisation d'un système selon l'une des revendications 1 à 10 dans une turbomachine, dans laquelle
l'élément coulissant (30) est monté rotatif sur le manchon (40) autour de l'axe de passage (D), de sorte que le premier élément de turbomachine (10) puisse être déplacé par rapport au second élément de turbomachine (20) le long de l'axe de passage (D) entre celui-ci (20) et une butée (60) et/ou le moyen de fixation (50) ; et
l'élément coulissant (30) comporte une paire de surfaces de contact planes (34) pour un guidage solidaire le long de l'axe de déplacement (V), lesquelles surfaces de contact viennent en prise avec des surfaces de contact (14) correspondantes du trou allongé, de sorte que le premier élément de turbomachine (10) soit au moins sensiblement non déplaçable par rapport au second élément de turbomachine (20) le long d'un axe transversal (Q) perpendiculaire à l'axe de déplacement (V) et perpendiculaire à l'axe de passage (D).
